# EUROPÄISCHE PATENTSCHRIFT

(11) **EP 0 722 256 B1**
(45) Veröffentlichungstag und Bekanntmachung des Hinweises auf die Patenterteilung: **16.08.2000**
(21) Anmeldenummer: 95120179.7
(22) Anmeldetag: 20.12.1995
(51) Int. Cl.: H04N 13/00, G02B 27/22

(54) **Personenadaptiver autostereoskoper Shutter-Bildschirm (PAAS)**
Viewer-adaptive autostereoscopic display screen with shutter
Ecran d'affichage autostéreoscopique avec obturateur et adaptable aux spectateurs

(30) Priorität: 07.01.1995 DE 19500315
(43) Veröffentlichungstag der Anmeldung: 17.07.1996
(73) Patentinhaber: Hentschke, Siegbert, Dr., 34132 Kassel (DE)
(72) Erfinder: Hentschke, Siegbert, Dr., 34132 Kassel (DE)
(74) Vertreter: Freiherr von Schorlemer, Reinfried, Dipl.-Phys.

(56) Entgegenhaltungen:
- EP-A- 0 540 137
- EP-A- 0 645 659
- WO-A-92/22989
- WO-A-94/10805

## Beschreibung

Die Erfindung betrifft einen Videomonitor zur autostereokopen Darstellung von 3D-Bildern oder Szenen, bei denen die Position des Betrachters adaptiv in die stereoskope Ansicht einbezogen werden kann. Insbesondere ist sie für die Mikrochirurgie oder Computertomographie in der Medizintechnik geeignet, bei der es darauf ankommt, auch die dritte Dimension der Tiefe ohne störende Hilfsmittel wahrnehmen zu können, so daß zu betrachtende oder zu behandelnde Teile vor und hinter dem Bildschirm erscheinen können. Verbunden mit der 3D-Darstellung ist eine zweikanalige Übertragung oder Aufbereitung, die dem Betrachter die unterschiedlichen Perspektiven für das rechte und linke Auge über ein kombiniertes Linsenraster-Shuttersystem vermittelt, das die volle autostereokope Sicht für eine Person an alle Positionen des Betrachters ohne mechanische Verstellungen adaptieren kann. Betroffen sein kann auch ein zukünftiges 3D-Fernsehgerät, sobald eine zweikanalige Videoaufbereitung und -übertragung die 3D-Darstellung ermöglicht. Dabei kann eine An- und Abschaltung des 3D-Effektes vorgesehen sein oder auch eine zusätzliche Nutzung einer Shutterbrille, falls mehrere Personen gleichzeitig eine stereoskope Sicht wünschen. Gleichzeitig kann dieses System dazu dienen, bei zweidimensionaler Darstellung die Auflösung des Bildes zu erhöhen.

**STAND DER TECHNIK**: Stereoskope Film- und Projektionsverfahren sind seit Jahren im Einsatz. Meist wird polarisiertes Licht (horizontal/vertikal, zirkular) benutzt, um das rechte und linke Bild zu trennen [10]. Mit dem Fortschritt der LCD-Technik wurde es möglich, die Lichtdurchlässigkeit von Kristallen elektronisch zu steuern. Dies machte die Entwicklung der Shutter-Technik möglich, bei der synchron mit der Halbbildfrequenz abwechselnd das rechte und das linke Brillenglas lichtundurchlässig wird und synchron dazu rechte und linke Bilder sequentiell auf dem Bildschirm erscheinen[4].

Autostereoskope Projektionen werden mit Hilfe von Leinwänden mit Streifenlinsenraster bei mehreren Projektionsrichtungen durchgeführt. Dabei wird der entsprechenden Richtung das richtige Perspektivbild zugeordnet [2]. Ein fließender Übergang von einer Perspektive zur nächsten ist dabei kaum zu erreichen, da die Anzahl der Projektionsrichtungen nicht beliebig erhöht werden kann. Bei einem autostereoskopen Display, das für nur eine Person bestimmt ist, verwendet man nur zwei Perspektiven, die eine bestimmte Blickrichtung erfordern [3], [7]. Ein voll stereoskopes Bild wie in einem Hologramm darzustellen, wird erreicht unter Verwendung von "Head Tracking"-Sensoren, die einerseits einen leistungsstarken Echtzeitrechner steuern zur Berechnung der passenden stereoskopen Bildperspektiven und andererseits den autostereoskopen Schirm steuern zur mechanischen Nachführung der Linsenrasterscheibe. Hierbei wird die genaue Kopfposition und -bewegung detektiert und die zugehörigen Bilder werden gleichzeitig generiert. Darüber hinaus kommen auch aufwendige VR-Systeme (Virtual Reality) unter Benutzung gewohnheitsbedürftiger "Head Mounted Displays" zum Einsatz.

In der Medizintechnik sind Kernspinresonanz und Computertomographie die wichtigsten Einsatzgebiete für stereoskope 3D-Visualisierungen. Um bestimmte gesuchte Perspektiven zu berechnen, werden leistungsfähige Spezialrechner für "Volume Tracing Algorithms" entwickelt [5]. Kombinierte Computervisualisierungen und Echtzeitübertragungen von Endoskopen werden zu einem der wichtigsten neuro-chirurgischen Werkzeuge. Stereoskope Endoskope sind bereits im Einsatz. Eine elektronische Bewegungssteuerung über einen auf Infrarotbasis arbeitenden "Head Tracking Sensor" wird leicht zu kombinieren sein mit einem personenbezogenen autostereoskopen Bildschirmsystem.

**PROBLEMSTELLUNG:** Um eine natürliche stereoskope Darstellung zu erzeugen, muß eine autostereoskope Methode eingesetzt werden. Dabei darf der Betrachter nicht an eine bestimmte Position vor dem Bildschirm gebunden sein, sondern sollte gezielt das Mittel der Kopfbewegung benutzen können, um eine 3D-Szene aktiv aus geringfügig veränderten Blickrichtungen beobachten zu können. Dies erfordert ein adaptives System, das sich natürlich nur an einem Betrachter orientieren kann. Daneben sollte ein solches System für einen breiteren Einsatz des Bildschirmes auch die Möglichkeit bieten, sich auf einen nicht stereoskopen Darstellungsmodus umschalten zu lassen. Da dann rechte und linke Bildkanäle zur Verfügung stehen, soll auch der gegenüber einer konventionellen monoskopen Darstellung vorhandene doppelte Informationsfluß dazu genutzt werden können, die Auflösungsqualität des Bildes zu verdoppeln.

Eine weitere Problemstellung ist, die in adaptiven autostereoskopen Schirmen bislang erforderliche Mikromechanik für die Linsenrasterscheibe durch eine rein elektronische, wartungsfreie und störungssicherere Lösung zu ersetzten. Dabei soll die Möglichkeit eröffnet werden, relativ hohe Herstellungskosten durch hohe Stückzahlen drastisch zu reduzieren durch eine große Applikationsbreite.

Es sind bislang keine Lösungen für autostereoskope Bildschirme bekannt, die wahlweise im stereoskopen oder hochauflösenden Modus betrieben werden können und die sich technologisch durch eine rein elektronische Betrachteradaption für eine Großserien-Produktion eignen würden.

**PRINZIP DER ERFINDUNG**: Das Prinzip des autostereoskopen Bildschirms beruht bekanntlich darauf, daß aufgrund von prismen- oder linsenförmigen vertikalen Streifen im doppelten Pixelabstand auf dem Glas vor dem ebenen Bildschirm das rechte Auge nur alle geradzahligen Pixel in einer Zeile und das linke Auge nur alle ungeradzahligen Pixel sieht (oder umgekehrt). Dadurch kann jedem Auge mit der richtigen Pixelansteuerung ein eigenes Bild unabhängig übermittelt werden - insgesamt also ein stereoskopes Bild. Dies beschränkt sich nicht auf schwarz-weiße Darstellungen, sondern funktioniert für alle drei in einem Pixel angesteuerten Farbpunkte (in der Regel RGB). Allerdings ist hier darauf zu achten, daß die drei Farbpixel übereinander und nicht - wie häufig anzutreffen - waagerecht oder dreiecksförmig nebeneinander liegen, da sonst nicht kontrollierbare Farbverfälschungen auftreten können.

Verändert sich die Position der Augen vor dem Bildschirm, so muß entweder die Punktposition (vgl. [1]) elektronisch nachgeführt oder das Raster gegenüber dem Bildpunkt mechanisch nachgeführt werden. Ersteres Prinzip wäre nur für teurere Trinitron-Index-Elektronenstrahlröhren anwendbar. Letzteres ist mehr oder weniger auf die Verwendung von Flachbildschirmen angewiesen.

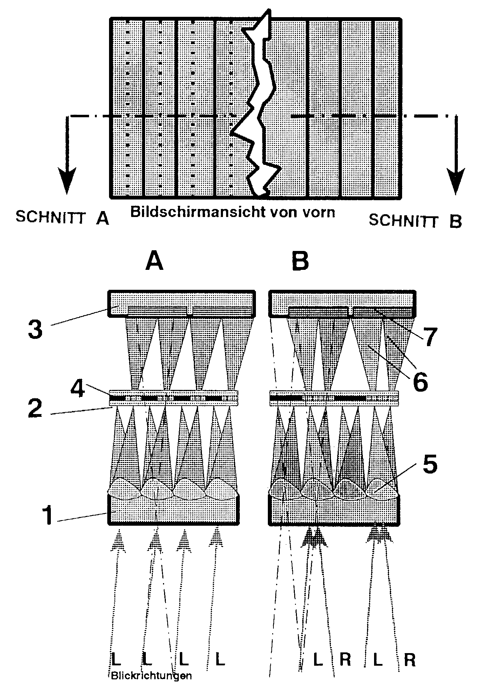

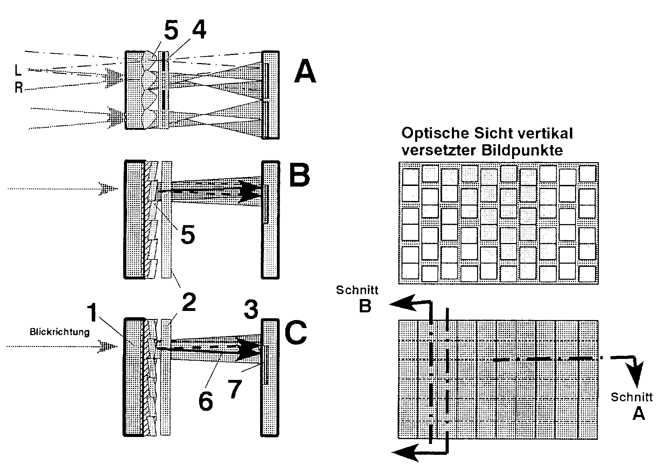

Die beschriebene Problemstellung wird erfindungsgemäß dadurch gelöst, daß neben einer Zylinderlinsenrasterscheibe (1) ein Schattenlinien-Flüssigkristall-Lichtmodulator (2) eingesetzt wird, dessen Schattenbalkenbreite und Position elektronisch gesteuert werden kann und die auch innerhalb einer ms abgeschaltet werden kann. Wird ein derartiges LCD zwischen Linsenrasterscheibe und Bildoberfläche in der Nähe des Brennpunktes der Zylinderlinsen eingesetzt, so kann man nach dem ShutterPrinzip in einer doppelten 100(120)Hz-Frequenz abwechselnd rechtes und linkes Bild sichtbar machen, indem entsprechend Abbildung 1 die ungeraden und geraden Balkennummern synchron zu Halbbildern ab- bzw. angeschaltet werden. Das hat den Vorteil, daß das Linsenraster nicht synchron zu Bildpixeln nachgeführt werden muß. Bei Veränderungen der Betrachterposition können dann die Balkenpositionen elektronisch nachgeführt werden. Da sich die Brennpunkttiefe bei Veränderung des (viel größeren) Betrachtungsabstandes nur unbedeutend verändert, kann das Balkenraster auch an den detektierten Betrachtungsabstand problemlos adaptiert werden, ohne daß der Abstand der Zylinderlinsenscheibe (1) von der Bildoberfläche (3) verändert werden muß. Da bei diesem Prinzip über eine Zylinderlinsenbreite die Seitenpositionen vertauscht werden, sollte der Pitchabstand der Linsen etwa halb so groß sein wie der (informationstheoretische) Bildpunktabstand. Bei Verwendung eines TFT-Farb-Displays sollten dann die drei Farbflächen eines Pixels übereinander liegen und auf eine Pixelgröße sollten zwei Linsenbreiten fallen. Da bei einer präzisen Anordnung der Zylinderlinsenstruktur, entsprechend der Strahlengangszeichnung in Bild 1, keine Bildelemente für ein Auge verdeckt oder doppelt erscheinen, ist dieses Prinzip nicht auf eine pixelsynchrone Anordnung und auch nicht auf eine planare Oberfläche des Bildes angewiesen. Damit können grundsätzlich auch herkömmliche Farbbildröhren benutzt und aufgerüstet werden für eine autostereoskope Darstellung.

Die Funktion des PAAS-Bildschirmes wird anhand der Bilder 1 und 2 im folgenden näher erläutert. Der Personen-adaptive autostereoskope Shutter-Bildschirm (PAAS) besteht aus einer Zylinderlinsenrasterscheibe (1) mit senkrecht verlaufenden Zylinderlinsen, einem spaltenweise elektronisch steuerbaren Schattenlinien-Flüssigkristall-Lichtmodulator (2) und einer Bildschirmfläche (3). Der Bildschirm ist vorzugsweise ein Flachbildschirm mit übereinander angeordneten Farbpixeln (z.B. TFT-Farbdisplay) oder ein herkömmlicher Farbbildschirm mit 100 (120) Hz Bildfrequenz oder aber auch eine Projektionsfläche, auf die mit einer Bild- bzw. Halbbildfrequenz von 100 (120) Hz Bilder projiziert werden. Der Brennpunkt-Abstand (r) der Zylinderlinsen zu diesen ist etwa r = p*b/2a, wobei b der Betrachterabstand (z.B. b = 2000 mm), a der Basisabstand der Augen (z.B. a=75 mm) und p der Pitchabstand der Zylinderlinsen ist (z.B. p=0,5 mm); dieser ist gleich der Linsenbreite. Dadurch ergibt sich beispielsweise ein Brennpunktabstand von r = 0,5*2000/ (2*75) mm = 6,66 mm. In diesem Abstand von der Scheibe (1) ist dann auch der Schattenlinien-Flüssigkristall-Lichtmodulator (2) angeordnet. Dieser erzeugt lichtundurchlässige senkrechte Balken etwa der halben Linsenbreite (z.B. 0,25 mm). Diese Balken sind beispielsweise in Stufen, die der halben Balkenbreite entsprechen (d.s. 0,125 mm) elektronisch steuerbar horizontal verschiebbar - wenn möglich sogar in halb so großen Schritten. Die Balken des LCDs werden alle 10 (8,66) ms neu gesetzt.

Im doppelten Brennpunktabstand, also z.B. im Abstand von 13,2 mm von der Scheibe (1) ist dann die das Licht emittierende Bildschicht. Dabei sind Glasdicken entsprechend optisch mit zu berücksichtigen -einschließlich Brechungsindex n, der zu einer entsprechenden Veränderung des tatsächlichen Abstandes beiträgt.

Im Stereo-Modus werden in der Regel innerhalb eines Zyklus die Bilder in folgender Reihenfolge dem Betrachter angeboten: 1. rechtes Halbbild - 1. linkes Halbbild - 2. rechtes Halbbild - 2. linkes Halbbild. Im normalen Einkanalbetrieb werden die Balken im LCD abgeschaltet und die Bilder werden, wie im derzeitigen flimmerfreien 100 Hz-Fernseher in der Reihenfolge "1. HB - 1.HB - 2. HB - 2. HB" angeboten.

Bild 1B zeigt, daß die gleiche Anordnung genutzt werden kann, um die horizontale Auflösung des Bildes zu verdoppeln: wenn nur die Schattenbalken über eine ganze Linsenbreite verdoppelt werden und abwechselnd ungerade und gerade Linsennummern (Spalten) sichtbar machen. Natürlich müssen dann auch die Bilder entsprechend codiert werden: es werden die Bilder dann in folgender Reihenfolge gesendet: 1. HB ungerade Spalten - 1. HB gerade Spalten - 2. HB ungerade Spalten - 2. HB gerade Spalten. Dabei müssen für die optimale Auflösungsverbesserung das Bild und die Balkenposition an die Position des Betrachters adaptiert werden.

Um aus allen Blickrichtungen ungerade und gerade Linsenspalten abwechselnd durchsichtig zu machen, kann der Schattenlinien-Flüssigkristall-Lichtmodulator (2) an die Linsenscheibe (1) herangefahren werden, wie es Bild 2 zeigt.
Um eine Auflösungsverbesserung des Bildes sowohl in horizontaler als auch in vertikaler Richtung zu erzielen, können ungerade und gerade Spalten optisch gegeneinander um eine halbe Zeile versetzt werden. Erreicht wird dies dadurch, daß den vertikalen Zylinderlinsen eine Sägezahnstruktur überlagert wird, die in geraden und ungeraden Zylinderlinsen entgegengesetzt verläuft, wie es in den Bildern 2B und 2C gezeigt ist. Entsprechend muß natürlich auch die Bildcodierung angepaßt werden, um eine Auflösungsverbesserung in beiden Richtungen zu erreichen. Es ist auch bekannt, daß eine solche "Offset-Abtastung" des Bildes der menschlichen Wahrnehmung sogar besser entspricht [8], da bei einem solchen Abtastraster theoretisch die darstellbaren höchsten Ortsfrequenzen in vertikaler und horizontaler Richtung um den Faktor "Wurzel von 2" mal so groß sind wie in diagonaler Richtung.

Ist bei einem Bild die erzeugende Helligkeit unkritisch und sind die Informationen auf dem Bildschirm nicht auf Punkte konzentriert, sondern über die Fläche kontinuierlich verteilt, wie beispielsweise in TFT-Displays, so kann an Stelle der Zylinderlinsenscheibe (1) auch ein einfaches Raster von vertikalen lichtundurchlässigen Balken verwendet werden, die etwa so breit sind wie die halbe Linsenbreite und im Pitchabstand der Linsen angeordnet sind. Das zweite Balkenraster kann dann adaptiv immer so angesteuert werden, daß für ein Auge die Durchsicht zur Bildoberfläche gesperrt wird, während das andere Auge in Streifen der halben Linsenbreite durchsehen kann. Um Unterabtasteffekte zu vermeiden, darf der Pitchabstand der Balken nicht größer sein als der Bildpunktabstand. Wie bei der Anwendung einer Polarisationsmethode mit Brillen für stereoskope Darstellung, geht auch hier bei dem Einsatz von zwei Balkenstrukturen insgesamt ein Dreiviertel des Lichtes verloren.

Hat man die Möglichkeit, auch anstelle der Zylinderlinsenscheibe einen zweiten steuerbaren Schattenlinien-Flüssigkristall-Lichtmodulator einzusetzen, so kann man vorteilhafterweise die Balken zum Bildpixel ortssynchron adaptiv ansteuern, um sonst geringfügig auftretende Moiré-Effekte zu vermeiden.

Als Positionsdetektoren eignen sich Infrarot-Head Tracking Systeme, die heute bereits die erforderliche Präzision aufweisen, aber auch preisgünstige Ultraschallsysteme sind verwendbar. Möchte man auch die vertikale Position und den Betrachtungsabstand detektieren, so empfiehlt es sich, mindestens zwei Sensorfelder einzusetzen. Es können aber auch CCD-Kameras mit einer schnellen Bildauswertung eingesetzt werden. Ultraschallvermessungen sind dann besonders einfach, wenn der Sender am Kopf des Betrachters angebracht werden darf.

**BESCHREIBUNG DER EINSATZGEBIETE FÜR DEN PERSONENADAPTIVEN AUTOSTEREOKOPEN BILDSCHIRM:** Ein autostereoskoper Bildschirm hat gegenüber anderen Methoden wie Shutterprinzip oder Polarisationsprinzip mit Brillen den Vorteil, daß der Benutzer keine Brille benötigt. Um den Stereoeffekt aus verschiedenen Blickrichtungen eines Betrachters zu erhalten, wird in bisher bekannten Systemen die Linsen- bzw. Prismenscheibe vor der Bildoberfläche mechanisch adaptiv, der Betrachterposition entsprechend, nachgeführt. Um verschleißanfällige mechanische Bewegungsoperationen einer Scheibe zu vermeiden, wird in diesem Beitrag alternativ zur mikromechanischen Steuerung eine auch für hohe Stückzahlen geeignete elektronische Lösung vorgestellt, die auch in Hinblick auf ein zukünftiges hochauflösendes Fernsehen konzipiert ist: wahlweise bzw. von einem Fernsehprogramm gesteuert, kann ein personenadaptiver stereoskoper oder ein hochauflösender (HDTV) Modus eingestellt werden.

Die autostereoskope Nutzung bleibt dennoch auf eine Person je Bildschirm beschränkt, was aber einen kollektiven stereoskopen Einsatz nicht behindert, z. B. unter zusätzlichem Einsatz des Shutterprinzips mit Brillen. Die wichtigsten kurzfristigen Applikationen sind in der Medizintechnik zu sehen. Hier ist der Bezug auf eine Person auch kein Nachteil; ohnehin beurteilt nur eine Person ein 3D-CT-Bild: der Arzt, der störende Brillen und eingeschränkte Blickfelder vermeiden muß. Sind mehrere Ärzte gleichzeitig tätig, so können mehrere Bildschirme benutzt werden. Will gleichzeitig ein Auditorium eine mikrochirurgische Operation stereoskop mitverfolgen, so kann dies über ein Projektionsverfahren mit z. B. polarisiertem Licht erfolgen.

In einem zukünftigen digitalen Fernsehsystem wird auch das stereoskope Fernsehen seinen Platz haben, da es einfach den natürlichen Sehgewohnheiten am nähesten kommt und optional nutzbar sein kann, wenn die digitale Codierung bei der Übertragung die Zusatzinformation für die dritte Dimension mitliefert. Aber auch heute könnten ohne viel Zusatzaufwand stereoskope Testsendungen vorgenommen werden -durch Absprachen für die Nutzung von Programmkanälen, wobei in einem Kanal das rechte und im anderen das linke Bild gesendet würde. Ist keine stereoskope Aufzeichnung vorhanden, so könnte anstatt dessen "Quasi-HDTV" über zwei PAL-Kanäle mit heutiger Sendetechnik voll kompatibel geprobt werden. Im Heim, "beim Verbraucher", können durch Nachrüstungen für vorhandene 100 Hz-Fernseher stereoskope Darstellungen nach dem Shutterprinzip eingesetzt werden [4]. Werden preisgünstigere Flachbildschirme auf dem Markt sein, ist die Aufrüstung mit einem PAAS-Zusatz naheliegend. Der interessierte Abnehmer wird, wie heute seinen PC, morgen auch seinen autostereoskopen Fernseher haben; bietet er doch die größtmögliche Natürlichkeit durch die 3D-Darstellung ohne störende Hilfsmittel.

Schließlich ist das heute mit viel Investitionen bedachte Gebiet der Flugsimulation und -navigation als Einsatzgebiet zu nennen, da hier ohnehin immer nur eine Person als Nutzer vorgesehen ist.

### Literatur

[1] *S.Hentschke:* Stereoskoper Bildschirm. Patentanmeldung P 41 14 023.0 (1991).
[2] *R. Börner:* Autostereoscopic 3-D Imaging by Front and Rear Projection and on Flat Panel Displays. Displays, Vol. 14, No.1 (1993), pp. 39-46.
[3] *Sheat D E, Chamberlin G R, Gentry P, Leggat JS, McCartney DJ:* 3-D Imaging Systems for Telecommunications Applications. Proc. SPIE, Vol. 1669, p.186.Electronic Imaging Systems and Applications Meeting, San Jose (1992)
[4] *S.Hentschke, A.Herrfeld, C.Junge, R.Kothe:* Stereoskope Echtzeitbildverarbeitung. CeBIT Exponat und Broschüre (1994).
[5] *H.P.Mainzer, K.Meetz, D.Scheppelmann, U.Engelmann, H.J.Bauer:* The Heidelberg Ray Tracing Model. IEEE Computer Graphics and Appl. Nov. 1991 pp.34ff.
[6] *S. Hentschke:* Personenbezogener autostereoskoper Bildschirm. Patentanmeldung P 44 33 058.8 (1994).
[7] *R. Börner:* Autostereoskope Rückprojektions- und Flachbildschirme. Fernseh- und Kinotechnik Bd. 48, Nr. 11 (1994). S.594-600.
[8] *B. Wendland:* Konzepte für ein kompatibles HiFi-Fernsehsystem. NTG-Fachberichte 74. (1980) S. 325-334
[9] *R. Börner:* Wiedergabeeinrichtung für dreidimensionale Wahrnehmung von Bildern. Autostereoscopic Viewing Device for Creating Three Dimensional Perception of Images. Deutsche Patent Nr. DE 3921061- A1. (Anm. 1989).
[10] *Verhulst, A.G.:* Display and pick-up device for stereoscopic picture display: European Patent 0 332 268 (1988)

## Patentansprüche

1. Personenadaptiver autostereoskoper Shutter-Bildschirm, der sog. PAAS-Bildschirm, bestehend aus einer Zylinderlinsenrasterscheibe (1), einem Schattenlinien-Flüssigkristall-Lichtmodulator (2) und einer Bildebene (3), bestehend aus Bildschirm, Bildröhre, Display oder Projektionsfläche, **gekennzeichnet dadurch**, daß der Schattenlinien-Flüssigkristall-Lichtmodulator (2) zwischen Zylinderlinsenrasterscheibe (1) und Bildebene (3) etwa im Brennpunkt der Linse angeordnet ist und daß der Schattenlinien-Flüssigkristall-Lichtmodulator (2) die undurchsichtigen Schattenbalken auflösungsabhängig durch Lichtmodulation in veränderbarer Breite elektronisch in stereoskopischem oder hochauflösendem Modus abwechselnd und bildsynchron im Strahlengang des rechten bzw. linken Auges zum Bildschirm 8 bis 10 ms lang an- und abschaltet, wodurch nur das rechte Auge 8 bis 10 ms lang bildsynchron bis zum Bild durchsehen kann und darauffolgend nur das linke über den gleichen Zeitraum und daraufhin wieder das rechte usw.

2. PAAS-Bildschirm nach Anspruch 1, gekennzeichnet dadurch, daß die modulierbare Breite der Schattenbalken abhängig vom selektierten Modus zwischen einem halben und einem ganzen Pitchabstand der Zylinderllnsen liegt und dementsprechend der Pitchabstand dieser Schattenbalken des Schattenlinien-Flüssigkristall-Lichtmodulators (2) zwischen einem und zwei Pitchbreiten der Zylinderlinsen liegt.

3. PAAS-Bildschirm nach Anspruch 1 oder 2, gekennzeichnet dadurch, daß der Abstand des Brennpunktes der Zylinderlinse zur Linse der Linsenrasterscheibe (1) ungefähr so groß ist wie der halbe Pitchabstand der Zylinderlinsen multipliziert mit dem Verhältnis des Abstandes des Betrachters vom Bildschirm zum Basisabstand der Augen, z.B. 2000mm/75mm.

4. PAAS-Bildschirm nach Anspruch 1 oder 2, gekennzeichnet dadurch, daß sich die in der Breite modulierbaren Schattenbalken des Schattenlinien-Flüssigkristall-Lichtmodulators (2) zusammensetzen aus mehreren, unabhängig voneinander an- und abschaltbaren Unterschattenbalken, die im Flüssigkristall feste Positionen haben und dicht aneinanderliegen und vorzugsweise eine Breite von einem Viertel oder einem Achtel des Linsen-Pitchabstands haben.

5. PAAS-Bildschirm nach Anspruch 1,2,3 oder 4, dadurch gekennzeichnet, daß entsprechend der Horizontal- und Abstandsposition des Betrachters vor dem Bildschirm, die mit einem am Bildschirmrand angebrachten optischen oder akustischen Sensorsystem erfaßt und in ein elektronisches Steuersignal umgesetzt wird, die Schattenbalken adaptiv verschoben werden können.

6. PAAS-Bildschirm nach einem der Anspruche 1 bis 4, durch gekennzeichnet, daß entsprechend der Horizontal- wie Abstandsposition und ggf. auch der Vertikalposition des Betrachters von dem Bildschirm, die Perspektiven eines darzustellenden 3D-Bildes in Echtzeit umgerechnet oder ausgelesen werden, so daß die im 3D-Bild dargestellten Gegenstände ihre virtuelle lokale Lage im Raum nicht ändern, wenn sich der Betrachter bewegt.

7. PAAS-Bildschirm nach einem der Ansprüche 1 bis 4, gekennzeichnet dadurch, daß der Schattenlinien-Flüssigkristall-Lichmodulator in einem hochauflösenden Mono-Modus mechanisch nach vorn an die Zylinderlinsen-Scheibe verstellt werden kann und für die Halbbilddauer von 10ms bzw. 8,33ms hinter jeder zweiten Zylinderlinse Schattenbalken in der Breite einer Linse eingeschaltet und abgeschaltet werden können abwechselnd über gerade und ungerade Zylinderlinsennummern.

8. PAAS-Bildschirm nach Anspruch 7, gekennzeichnet dadurch, daß der Zylinderlinsenscheibe (1) zusätzlich zu den vertikalen Linsen ein horizontales Sägezahnraster überlagert ist, dessen Schrägen von Linse zu Linse alternieren und dessen Pitchabstand etwa so groß ist wie der Pitchabstand der Linsen, so daß die Bildpunkte von Linse zu Linse um eine halbe Zeile vertikal versetzt erscheinen.

## Claims

1. Viewer-adaptive autostereoscopic display screen with shutter, the so-called VAAS display screen, comprising a cylindrical lens grid disc (1), a shadow line liquid crystal light modulator (2) and a focal plane (3), comprising a display screen, a picture tube, a display or projection screen, characterised in.that the shadow line liquid crystal light modulator (2) is disposed between the cylindrical lens grid disc (1) and the focal plane (3) approximately in the focal point of the lens and in that the shadow line liquid crystal light modulator (2) switches the opaque shadow beams on and off dependent upon the resolution by light modulation at a variable width, electronically alternating in stereoscopic or high resolution mode and synchronised with the image in the optical path of the right or left eye to the display screen for 8 to 10 ms, by means of which only the right eye can look as far as the image in synchronisation with the image for 8 to 10 ms and subsequently only the left eye can see over the same period of time and thereupon the right eye once again etc.

2. VAAS display screen according to claim 1, characterised in that the modulatable width of the shadow beams is between a half and a whole pitch spacing of the cylindrical lenses depending upon the selected mode and correspondingly the pitch spacing of these shadow beams of the shadow lines liquid crystal light modulator (2) is between one and two pitch widths of the cylindrical lenses.

3. VAAS display screen according to claim 1 or 2, characterised in that the spacing of the focal point of the cylindrical lens to the lens of the lens grid disc (1) is approx. as great as half of the pitch spacing of the cylindrical lenses multiplied by the ratio of the spacing of the viewer from the display screen to the base spacing of the eyes, e.g. 2000 mm/75 mm.

4. VAAS display screen according to claim 1 or 2, characterised in that the shadow beams of the shadow line liquid crystal light modulator (2), which beams are modulatable in width, are composed of a plurality of sub-shadow beams, which can be switched on and off independently of each other, have no fixed positions in the liquid crystal and are situated closely together, and preferably have a width of a quarter or an eighth of the lens pitch spacing.

5. VAAS display screen according to claim 1, 2, 3 or 4, characterised in that the shadow beams can be adaptively displaced corresponding to the horizontal- and spacing position of the viewer in front of the display screen, which position is detected with an optical or acoustic sensor system provided at the edge of the display screen and is converted into an electronic control signal.

6. VAAS display screen according to one of the claims 1 to 4, characterised in that, corresponding to the horizontal position as spacing position and possibly also to the vertical position of the viewer from the display screen, the perspectives of a 3D image to be displayed in real time are converted or read out so that the objects displayed in the 3D image do not change their virtual local position in space when the viewer moves.

7. VAAS display screen according to one of the claims 1 to 4, characterised in that the shadow line liquid crystal light modulator can be displaced in a high resolution mono-mode mechanically forwards to the cylindrical lens disc and, for the field duration of 10 ms or 8.33 ms, shadow beams at the width of a lens can be switched on and off behind each second cylindrical lens, alternating via even and odd cylindrical lens numbers.

8. VAAS display screen according to claim 7, characterised in that a horizontal saw-tooth grid is superimposed on the cylinder lens disc (1) in addition to the vertical lenses, the inclinations of which saw-tooth grid alternate from lens to lens and the pitch spacing of which is approx. as great as the pitch spacing of the lenses so that the image points appear vertically offset by half a line from lens to lens.

## Revendications

1. Ecran autostéréoscopique avec obturateur et adaptable aux spectateurs, dit écran PAAS, composé d'un disque de trame de lentilles cylindriques (1), d'un modulateur de lumière à cristaux liquides et lignes d'ombre (2) et d'un plan d'image (3), composé d'un écran, d'un tube image, d'un afficheur ou d'une surface de projection, caractérisé en ce que le modulateur de lumière à cristaux liquides et lignes d'ombre (2) est disposé entre le disque de trame de lentilles cylindriques (1) et le plan d'image (3) approximativement au foyer de la lentille et en ce que le modulateur de lumière à cristaux liquides et lignes d'ombre (2) active et désactive pendant 8 à 10 ms les barres d'ombre opaques en fonction de la résolution, par modulation de lumière sur une largeur variable, de façon électronique, alternativement dans un mode stéréoscopique ou à haute résolution et en synchronisant les images dans le chemin optique de l'oeil droit ou de l'oeil gauche jusqu'à l'écran, de sorte que seul l'oeil droit peut voir l'image pendant 8 à 10 ms avec des images synchronisées, et ensuite seul l'oeil gauche pendant la même durée, et après cela à nouveau l'oeil droit, et ainsi de suite.

2. Ecran PAAS selon la revendication 1, caractérisé en ce que la largeur modulable des barres d'ombre, en fonction du mode sélectionné, se situe entre la moitié et la totalité d'un espacement de pas des lentilles cylindriques, et par conséquent, l'espacement de pas de ces barres d'ombre du modulateur de lumière à cristaux liquides et lignes d'ombre (2) se situe entre une et deux largeurs de pas des lentilles cylindriques.

3. Ecran PAAS selon la revendication 1 ou 2, caractérisé en ce que la distance entre le foyer de la lentille cylindrique et la lentille du disque de trame de lentilles (1) a une dimension qui correspond approximativement à la moitié de l'espacement de pas des lentilles cylindriques multipliée par le rapport de la distance entre le spectateur et l'écran et la distance de base des yeux, par exemple 2000 mm/ 75 mm.

4. Ecran PAAS selon la revendication 1 ou 2, caractérisé en ce que les barres d'ombre modulables en largeur du modulateur de lumière à cristaux liquides et lignes d'ombre (2) se composent de plusieurs barres d'ombres secondaires, pouvant être activées et désactivées indépendamment les unes des autres, qui ont des positions fixes dans les cristaux liquides et sont étroitement adjacentes et ont de préférence une largeur d'un quart ou d'un huitième de l'espacement de pas des lentilles.

5. Ecran PAAS selon la revendication 1, 2, 3 ou 4, caractérisé en ce qu'en fonction de la position horizontale et de distance du spectateur devant l'écran, qui est détectée par un système de capteurs optique ou acoustique fixé sur le bord de l'écran et convertie en un signal de commande électronique, les barres d'ombre peuvent être déplacées de façon adaptative.

6. Ecran PAAS selon l'une quelconque des revendications 1 à 4, caractérisé en ce qu'en fonction de la position horizontale et de distance, et éventuellement aussi en fonction de la position verticale du spectateur par rapport à l'écran, les perspectives d'une image 3D à représenter sont converties ou extraites en temps réel, de sorte que les objets représentés sur l'image 3D ne modifient pas leur situation locale virtuelle dans l'espace lorsque le spectateur bouge.

7. Ecran PAAS selon l'une quelconque des revendications 1 à 4, caractérisé en ce que le modulateur de lumière à cristaux liquides et lignes d'ombre, dans un mode mono haute résolution, peut être ajusté mécaniquement vers l'avant contre le disque de lentilles cylindriques, et des barres d'ombre de la largeur d'une lentille peuvent être activées ou désactivées pendant la moitié de la durée d'une image de 10 ms ou 8,33 ms derrière une lentille cylindrique sur deux, alternativement pour des numéros de lentilles cylindriques pairs et impairs.

8. Ecran PAAS selon la revendication 7, caractérisé en ce qu'en plus des lentilles verticales, une trame horizontale en dents de scie est superposée au disque de lentilles cylindriques (1), les inclinaisons de ladite trame alternant d'une lentille à l'autre et dont l'espacement de pas a approximativement la même dimension que l'espacement de pas des lentilles, de sorte que les points d'image apparaissent verticalement décalés d'une demi-ligne d'une lentille à l'autre.
